# EUROPÄISCHE PATENTSCHRIFT

(11) **EP 0 808 608 B1**
(45) Veröffentlichungstag und Bekanntmachung des Hinweises auf die Patenterteilung: **31.07.2002**
(21) Anmeldenummer: 97107994.2
(22) Anmeldetag: 16.05.1997
(51) Int. Cl.: A61C 8/00

(54) **Prothetischer Aufbaupfosten für Zahnimplantate**
Abutment for dental implants
Faux moignon pour implants dentaires

(30) Priorität: 21.05.1996 DE 19620394
(43) Veröffentlichungstag der Anmeldung: 26.11.1997
(73) Patentinhaber: Degussa Dental GmbH, 63457 Hanau (DE)
(72) Erfinder: Groll, Werner, Dr., 63755 Alzenau-Hörstein (DE); Lange, Thomas, 63505 Langenselbold (DE); Grote, Pascale, 63450 Hanau (DE); Meiers, Willi, 63755 Alzenau (DE)
(74) Vertreter: Stoffregen, Hans-Herbert, Dr. Dipl.-Phys.

(56) Entgegenhaltungen:
- EP-A- 0 707 835
- DE-A- 4 230 009
- DE-U- 9 207 282
- US-A- 5 376 004

## Beschreibung

Die Erfindung betrifft einen prothetischen Aufbaupfosten aus Metall für ein zweiphasiges Zahnimplantat, der mit einer zentralen Schraube auf dem im Kieferknochen verankerten enossalen Teil des Zahnimplantats befestigt wird und okklusal die prothetische Versorgung beispielsweise in Form einer Krone oder Brücke aufnimmt.

Ein Aufbaupfosten gemäß dem Oberbegriff des Anspruchs 1 ist aus der US-A-5 376 004 bekannt.

Nach dem Verlust der natürlichen Zähne bestehen verschiedene Möglichkeiten, diesen Verlust durch künstliche Prothesenteile auszugleichen. In den letzten Jahren werden im vermehrten Umfang Zahnimplantate verwendet, die meist aus zwei metallischen Teilen bestehen, von denen das eine Teil im zahnlosen Kiefer unter der Schleimhaut verankert wird. Auf dieses Teil wird nach dem Festwachsen im Knochen ein zweites Teil, der sogenannte Aufbaupfosten, aufgeschraubt, der die zahnprothetischen Kostruktionen, beispielsweise in Form einer Krone oder Brücke trägt. Diese Aufbaupfosten werden in größerden Mengen vorfabriziert und in Standardausführungen geliefert.

Zahnimplantate und Aufbaupfosten sind in einer großen Zahl von Schriften beschrieben. Die Aufbaupfosten besitzen alle eine kreisrunde Form mit der sie durch die Gingiva in die Mundhöhle treten. Demgegenüber besitzt der natürliche Zahn einen Querschnitt, der mehr oder weniger deutlich von der Kreisform abweicht, besonders im Bereich der Frontzähne.

Um eine möglichst zahnähnliche prothetische Versorgung zu erreichen, muß daher ein großer zahntechnischer Aufwand betrieben werden, der aber meist hygienische Probleme in bezug auf die Reinigung dieser aufwendigen prothetischen Teile erzeugt.

Es war daher Aufgabe der vorliegenden Erfindung, einen prothetischen Aufbaupfosten aus Metall für ein zweiphasiges Zahnimplantat zu entwickeln, der mit einer zentralen Schraube auf dem im Kieferknochen verankerten enossalen Teil des Zahnimplantats befestigt wird und okklusal die prothetische Versorgung beispielsweise in Form einer Krone oder Brücke aufnimmt, wobei die Querschnittsform des Aufbaupfosten im Bereich der Mundhöhle der Form der natürlichen Zähne weitestgehend angepasst und auf den heute verfügbaren Bearbeitungsmaschinen leicht herstellbar sein sollte.

Diese Aufgabe wird erfindungsgemäß dadurch gelöst, daß der dem enossalen Teil des Zahnimplantats zugewandte Teil des Aufbaupfostens als Konus ausgebildet ist, dem sich ein Abschnitt in Form eines nach oben sich erweiternden Rotationshyperboloids anschließt, das in einem weiteren Abschnitt in die Form einer Rotationsparaboloidenstumpfes übergeht, der okklusal durch Materialabtrag die Form eines Kegelstumpfs besitzt, der im Querschnitt labial eine halbelliptische Grundfläche und lingual eine parabelförmige Grundfläche aufweist, wobei der Übergang zwischen Kegelstumpf und Rotationsparaboloidenstumpf im Bereich des Zahnfleischdurchtritts des Aufbaupfostens liegt und als gleichmäßig breiter Absatz von 0,1 bis 1,5 mm Breite ausgebildet ist und weiterhin der Kegelstumpf sich nach oben mit einem Winkel von 1 bis 15° verjüngt.

Vorzugsweise ist okklusal ein Teil des Kegelstumpfs unter einem Winkel von 30 bis 60° zur Hauptachse abgeschrägt und mit einem Bohrloch versehen.

Weiterhin ist von Vorteil, wenn der Aufbaupfosten aus Titan oder einer Titanlegierung gefertigt ist.

Der Kegelstumpf ist in seiner Form der Form der natürlichen Zähne weitestgehend angepasst, zumal der Querschnitt variiert werden kann. Das Abtragen des Materials des Rotationsparaboloidenstumpfes, vorzugsweise durch Fräsen, kann auf automatisch gesteuerten CNC-Maschinen erfolgen. Dieser Materialabtrag wird so gesteuert, daß als Übergang zwischen dem herausgearbeiteten Kegelstumpf und dem Rotationsparaboloid ein gleichmäßig breiter Absatz von 0,1 bis 1,5 mm Breite entsteht, auf dem das prothetische Teil in Form einer Brücke oder Krone aufgesetzt wird. Da der Materialabtrag durch den ungleichmäßigen Querschnitt des Kegelstumpfes verschieden tief erfolgt, ist dieser Absatz wellenförmig ausgebildet und daher auch in dieser Hinsicht dem natürlcihen Zahn angeglichen.

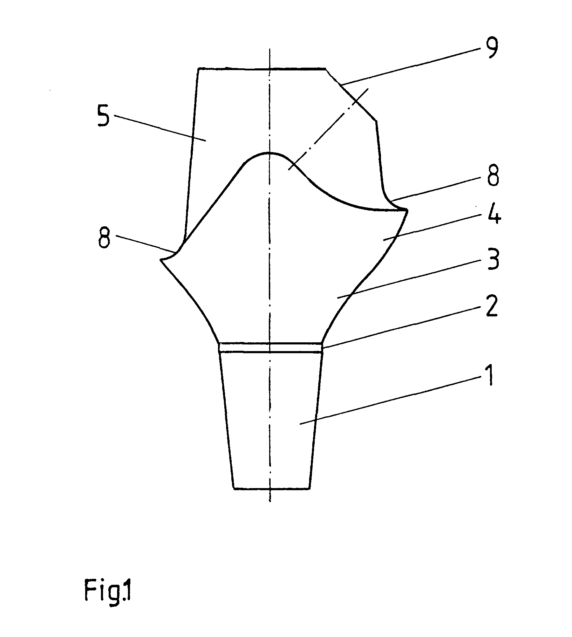

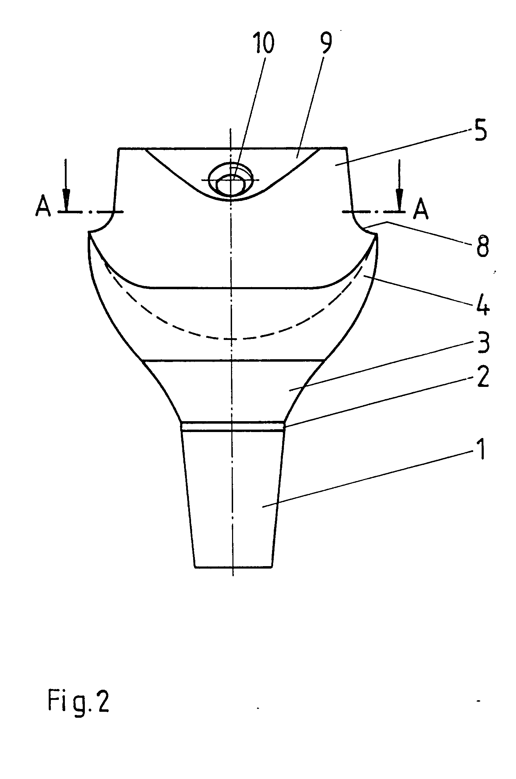

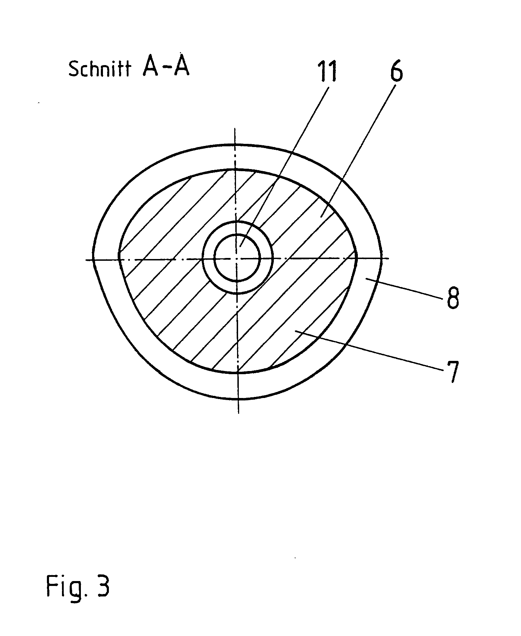

Die Abbildungen I bis III zeigen schematisch eine beispielhafte Ausführungsform des erfindungsgemäßen Aufbaupfostens, wobei die Abbildung I und II Längsschnitte und Abbildung III ein Querschnitt wiedergibt.

Der Aufbaupfosten besteht aus einem Teil (1), der als Konus ausgebildet ist, und sich unter einem Winkel von 4 bis 10° nach oben öffnet. Als Übergang zu dem Abschnitt (3), der als Rotationshyperboloid ausgebildet ist, ist ein kurzer zylindrischer Abschnitt (2) angeordnet, der aber nicht unbedingt notwendig ist, sondern nur der besseren Handhabung dient. Das Rotationshyperboloid geht in einen Abschnitt (4) über, der die Form eines Rotationsparaboloidenstumpfes besitzt und okklusal durch Materialabtrag in einem Kegelstumpf (5) endet. Dieser Kegelstumpf (5) besitzt einen Querschnitt, der labial eine halbelliptische Grundfläche (6) und lingual eine parabelförmige Grundfläche (7) aufweist. Durch Variation des Achsenverhältnisses der Halbellipse lässt sich auch der Querschnitt des Kegelstumpfes (5) variieren und so der individuellen Form der einzelenen natürlichen Zähne anpassen. Der Materialabtrag zur Ausbildung des Kegelstumpfes (5) erfolgt in der Weise, daß der Übergang zwischen Kegelstumpf (5) und Rotationsparaboloidenstumpf (4) als gleichmäßig breiter Absatz (8) ausgebildet ist. Durch den nur teilsymetrischen Querschnitt des Kegelstumpfes (5) ist dieser Absatz daher wellenförmig ausgebildet. Vorzugsweise ist ein Teil (9) des Kegelstumpfs (5) unter einem Winkel von 30 bis 60° zur Hauptachse abgeschrägt und mit einem Bohrloch (10) versehen, um den prothetischen Teil einwandfrei auf dem Aufbaupfosten befestigen zu können. Die Verschraubung des Aufbaupfostens mit dem enossalen Teil erfolgt über eine zentrale Bohrung (11).

## Patentansprüche

1. Prothetischer Aufbaupfosten aus Metall für ein zweiphasiges Zahnimplantat, der mit einer zentralen Schraube auf dem im Kieferknochen verankerten enossalen Teil des Zahnimplantats befestigt wird und okklusal die prothetische Versorgung in Form einer Krone oder Brücke aufnimmt, wobei
der dem enossalen Teil des Zahnimplantats zugewandte Teil (1) des Aufbaupfostens als Konus ausgebildet ist, dem sich ein Abschnitt (3) in Form eines nach oben sich erweiternden Rotationshyperboloids anschließt, das in einem weiteren Abschnitt (4) in die Form eines Rotationsparaboloidenstumpfes übergeht, der okklusal durch Materialabtrag die Form eines Kegelstumpfs (5) besitzt, **dadurch gekennzeichnet, daß** der Kegelstumpf im Querschnitt labial eine halbelliptische Grundfläche (6) und lingual eine parabelförmige Grundfläche (7) aufweist, wobei der Übergang zwischen Kegelstumpf (5) und Rotationsparaboloidenstumpf (4) im Bereich des Zahnfleischdurchtritts des Aufbaupfostens liegt und als gleichmäßig breiter Absatz (8) von 0,1 bis 1,5 mm Breite ausgebildet ist und weiterhin der Kegelstumpf (5) sich nach oben mit einem Winkel von 1 bis 15° verjüngt.

2. Prothetischer Aufbaupfosten nach Anspruch 1, **dadurch gekennzeichnet,**
**daß** okklusal ein Teil (9) des Kegelstumpfs (5) unter einem Winkel von 30 bis 60° abgeschrägt und mit einem Bohrloch (10) versehen ist.

## Claims

1. Metal abutment for a two-phase dental implant, which abutment is fastened by a central screw on the endosteal part of the dental implant anchored in the jaw bone and occlusally receives the prosthetic arrangement in the form of a crown or bridge, wherein the part (1) of the abutment facing the endosteal part of the dental implant takes the form of a cone, which is adjoined by a portion (3) in the shape of an upwardly widening hyperboloid of revolution, which changes in a further portion (4) into the shape of a truncated paraboloid of revolution, which occlusally as a result of material removal has the shape of a truncated cone (5),
**characterized in that**
the truncated cone in cross section has labially a semi-elliptic area (6) and lingually a parabolic area (7), wherein the transition between truncated cone (5) and truncated paraboloid of revolution (4) lies in the region of the passage of the mounting post through the gum and takes the form of a uniformly wide shoulder (8) 0.1 to 1.5 mm wide and moreover the truncated cone (5) tapers upwards at an angle of 1 to 15°.

2. Abutment according to claim 1,
**characterised in**
**that** a part (9) of the truncated core (5) is occlusally chamfered at an angle of 30 to 60° and provided with a drilled hole (10).

## Revendications

1. Pivot de prothèse dentaire en métal pour un implant dentaire exécuté en deux phases, fixé avec une vis centrale sur la partie ennossale de l'implant dentaire ancré dans l'os de la mâchoire, et recevant du côté occlusal, la prothèse proprement dite sous la forme d'une couronne ou d'un pont, dans lequel
la partie (1) du pivot tournée vers la partie ennossale de l'implant dentaire est en forme de cône suivie d'un segment (3) de forme hyperboloïde de révolution s'ouvrant vers le haut et rejoignant un autre segment (4) sous forme d'un tronc de paraboloïde de révolution, qui possède du côté occlusal la forme d'un tronc de cône (5) réalisé par enlèvement de matière,
**caractérisé en ce que**
le tronc de cône a en section, du côté labial, une forme de base semi-elliptique (6) et du côté lingual, une forme de base parabolique (7), et
la transition entre le tronc de cône (5) et le tronc de paraboloïde de révolution (4) se situe dans la zone du passage de la gencive par le pivot et
la forme d'un décrochement (8) ayant une largeur de 0,1 à 1,5 mm, le tronc de cône (5) se rétrécissant en outre vers le haut avec un angle de 1 à 15°.

2. Pivot de prothèse selon la revendication 1,
**caractérisé en ce que**
du côté occlusal, une partie (9) du tronc de cône (5) est coupée en biais suivant un angle de 30 à 60° et comporte un perçage (10).
